# EUROPEAN PATENT SPECIFICATION

(11) **EP 4 266 930 B1**
(45) Date of publication and mention of the grant of the patent: **07.01.2026**
(21) Application number: 21911365.1
(22) Date of filing: 14.12.2021
(51) Int. Cl.: A24F 40/51, A24F 40/53, H02J 7/00, A24F 40/20

(54) **AEROSOL-GENERATING DEVICE**
AEROSOLERZEUGUNGSVORRICHTUNG
DISPOSITIF DE GÉNÉRATION D'AÉROSOL

(30) Priority: 23.12.2020 KR 20200182389
(43) Date of publication of application: 01.11.2023
(73) Proprietor: KT&G Corporation, Daedeok-gu Daejeon 34337 (KR)
(72) Inventor: HAN, Daenam, Seoul 06344 (KR); JANG, Seoksu, Seoul 34337 (KR); LEE, Seungwon, Gwangmyung-si Gyeonggi-do 14293 (KR); YOON, Sungwook, Suwon-si Gyeonggi-do 16534 (KR); KIM, Yonghwan, Anyang-si Gyeonggi-do 13970 (KR)
(74) Representative: AWA Sweden AB
(86) International application number: PCT/KR2021/018938
(87) International publication number: WO 2022/139298

(56) References cited:
- CN-A- 109 870 133
- JP-A- 2000 353 552
- KR-A- 20160 048 917
- KR-A- 20190 027 238
- KR-A- 20190 097 928
- KR-A- 20190 097 928
- KR-A- 20200 081 297
- KR-A- 20200 141 814
- US-A1- 2018 226 698
- US-A1- 2020 212 516

## Description

### Technical Field

The present disclosure relates to an aerosol-generating device.

### Background Art

An aerosol-generating device is a device that extracts certain components from a medium or a substance by forming an aerosol. The medium may contain a multicomponent substance. The substance contained in the medium may be a multicomponent flavoring substance. For example, the substance contained in the medium may include a nicotine component, an herbal component, and/or a coffee component. Recently, various research on aerosol-generating devices has been conducted.
US 2020/0212516 A1 discloses determining whether a power supply is in a deteriorated state by diagnosing a condition of the power supply according to conditions of various sensors. JP 2000-353552 A discloses stopping charging when deformation of a case caused by deformation of a battery is detected using a sensor placed between the battery and the case. CN 109870133 A discloses determining whether a battery is deformed by real-time detection of characteristic parameters related to the battery's shape using various sensors. KR 10-2019-0097928 A discloses detecting swelling of a battery through a distance measurement unit that measures a distance to the battery using ultrasound.

### Disclosure of Invention

### Technical Problem

It is an object of the present disclosure to solve the above and other problems.

It is another object of the present disclosure to provide an aerosol-generating device capable of sensing the occurrence of swelling of a battery attributable to deterioration thereof.

### Solution to Problem

For solving the above problem, the present invention provides a device as defined in the present claim 1, wherein the dependent claims define advantageous embodiments thereof.

### Advantageous Effects of Invention

According to at least one of embodiments of the present disclosure, it is possible to monitor a change in the external shape of a battery in real time using various sensors and thus to immediately sense the occurrence of swelling of the battery attributable to deterioration thereof.

Additional applications of the present disclosure will become apparent from the following detailed description. However, because various changes and modifications will be clearly understood by those skilled in the art within the spirit and scope of the present disclosure, it should be understood that the detailed description and specific embodiments, such as preferred embodiments of the present disclosure, are merely given by way of example.

### Brief Description of Drawings

The above and other objects, features and other advantages of the present disclosure will be more clearly understood from the following detailed description taken in conjunction with the accompanying drawings, in which:
FIG. 1 is a block diagram of an aerosol-generating device according to an embodiment of the present disclosure;
FIGS. 2A to 4 are views for explaining an aerosol-generating device according to embodiments of the present disclosure;
FIG. 5 is a flowchart showing an operation method of the aerosol-generating device according to an embodiment of the present disclosure; and
FIGS. 6 to 8B are views for explaining the operation of the aerosol-generating device.

### Best Mode for Carrying out the Invention

Hereinafter, the embodiments disclosed in the present specification will be described in detail with reference to the accompanying drawings. The same or similar elements are denoted by the same reference numerals even though they are depicted in different drawings, and redundant descriptions thereof will be omitted.

In the following description, with respect to constituent elements used in the following description, the suffixes "module" and "unit" are used only in consideration of facilitation of description. The "module" and "unit" are do not have mutually distinguished meanings or functions.

In addition, in the following description of the embodiments disclosed in the present specification, a detailed description of known functions and configurations incorporated herein will be omitted when the same may make the subject matter of the embodiments disclosed in the present specification rather unclear. In addition, the accompanying drawings are provided only for a better understanding of the embodiments disclosed in the present specification and are not intended to limit the technical ideas disclosed in the present specification.

It will be understood that the terms "first", "second", etc., may be used herein to describe various components. However, these components should not be limited by these terms. These terms are only used to distinguish one component from another component.

It will be understood that when a component is referred to as being "connected to" or "coupled to" another component, it may be directly connected to or coupled to another component. However, it will be understood that intervening components may be present. On the other hand, when a component is referred to as being "directly connected to" or "directly coupled to" another component, there are no intervening components present.

As used herein, the singular form is intended to include the plural forms as well, unless the context clearly indicates otherwise.

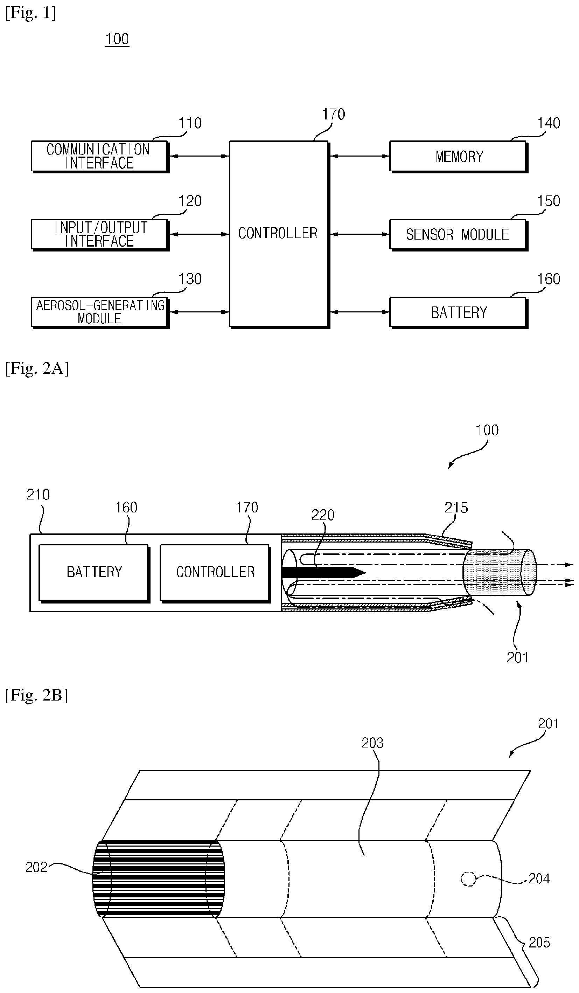

FIG. 1 is a block diagram of an aerosol-generating device according to an embodiment of the present disclosure.

Referring to FIG. 1, an aerosol-generating device 100 may include a communication interface 110, an input/output interface 120, an aerosol-generating module 130, a memory 140, a sensor module 150, a battery 160, and/or a controller 170.

In one embodiment, the aerosol-generating device 100 may be composed only of a main body. In this case, components included in the aerosol-generating device 100 may be located in the main body. In another embodiment, the aerosol-generating device 100 may be composed of a cartridge, which contains an aerosol-generating substance, and a main body. In this case, the components included in the aerosol-generating device 100 may be located in at least one of the main body or the cartridge.

The communication interface 110 may include at least one communication module for communication with an external device and/or a network. For example, the communication interface 110 may include a communication module for wired communication, such as a Universal Serial Bus (USB). For example, the communication interface 110 may include a communication module for wireless communication, such as Wireless Fidelity (Wi-Fi), Bluetooth, Bluetooth Low Energy (BLE), ZigBee, or nearfield communication (NFC).

The input/output interface 120 may include an input device (not shown) for receiving a command from a user and/or an output device (not shown) for outputting information to the user. For example, the input device may include a touch panel, a physical button, a microphone, or the like. For example, the output device may include a display device for outputting visual information, such as a display or a light-emitting diode (LED), an audio device for outputting auditory information, such as a speaker or a buzzer, a motor for outputting tactile information such as haptic effect, or the like.

The input/output interface 120 may transmit data corresponding to a command input by the user through the input device to another component (or other components) of the aerosol-generating device 100. The input/output interface 120 may output information corresponding to data received from another component (or other components) of the aerosol-generating device 100 through the output device.

The aerosol-generating module 130 may generate an aerosol from an aerosol-generating substance. Here, the aerosol-generating substance may be a substance in a liquid state, a solid state, or a gel state, which is capable of generating an aerosol, or a combination of two or more aerosol-generating substances.

According to an embodiment, the liquid aerosol-generating substance may be a liquid including a tobacco-containing material having a volatile tobacco flavor component. According to another embodiment, the liquid aerosol-generating substance may be a liquid including a non-tobacco material. For example, the liquid aerosol-generating substance may include water, solvents, nicotine, plant extracts, flavorings, flavoring agents, vitamin mixtures, etc.

The solid aerosol-generating substance may include a solid material based on a tobacco raw material such as a reconstituted tobacco sheet, shredded tobacco, or granulated tobacco. In addition, the solid aerosol-generating substance may include a solid material having a taste control agent and a flavoring material. For example, the taste control agent may include calcium carbonate, sodium bicarbonate, calcium oxide, etc. For example, the flavoring material may include a natural material such as herbal granules, or may include a material such as silica, zeolite, or dextrin, which includes an aroma ingredient.

In addition, the aerosol-generating substance may further include an aerosol-forming agent such as glycerin or propylene glycol.

The aerosol-generating module 130 may include at least one heater (not shown).

The aerosol-generating module 130 may include an electro-resistive heater. For example, the electro-resistive heater may include at least one electrically conductive track. The electro-resistive heater may be heated as current flows through the electrically conductive track. At this time, the aerosol-generating substance may be heated by the heated electro-resistive heater.

The electrically conductive track may include an electro-resistive material. In one example, the electrically conductive track may be formed of a metal material. In another example, the electrically conductive track may be formed of a ceramic material, carbon, a metal alloy, or a composite of a ceramic material and metal.

The electro-resistive heater may include an electrically conductive track that is formed in any of various shapes. For example, the electrically conductive track may be formed in any one of a tubular shape, a plate shape, a needle shape, a rod shape, and a coil shape.

The aerosol-generating module 130 may include a heater that uses an induction-heating method. For example, the induction heater may include an electrically conductive coil. The induction heater may generate an alternating magnetic field, which periodically changes in direction, by adjusting the current flowing through the electrically conductive coil. At this time, when the alternating magnetic field is applied to a magnetic body, energy loss may occur in the magnetic body due to eddy current loss and hysteresis loss. In addition, the lost energy may be released as thermal energy. Accordingly, the aerosol-generating substance located adjacent to the magnetic body may be heated. Here, an object that generates heat due to the magnetic field may be referred to as a susceptor.

Meanwhile, the aerosol-generating module 130 may generate ultrasonic vibrations to thereby generate an aerosol from the aerosol-generating substance.

The aerosol-generating device 100 may be referred to as a cartomizer, an atomizer, or a vaporizer.

The memory 140 may store programs for processing and controlling each signal in the controller 170, and may store processed data and data to be processed.

For example, the memory 140 may store applications designed for the purpose of performing various tasks that can be processed by the controller 170. The memory 140 may selectively provide some of the stored applications in response to the request from the controller 170.

For example, the memory 140 may store data on the operation time of the aerosol-generating device 100, the maximum number of puffs, the current number of puffs, the number of uses of battery 160, at least one temperature profile, at least one electric power profile, the user's inhalation pattern, and data about charging/discharging. Here, "puff" means inhalation by the user. "inhalation" means the user's act of taking air or other substances into the user's oral cavity, nasal cavity, or lungs through the user's mouth or nose.

The memory 140 may include at least one of volatile memory (e.g. dynamic random access memory (DRAM), static random access memory (SRAM), or synchronous dynamic random access memory (SDRAM)), nonvolatile memory (e.g. flash memory), a hard disk drive (HDD), or a solid-state drive (SSD).

The sensor module 150 may include at least one sensor.

For example, the sensor module 150 may include a sensor for sensing a puff (hereinafter referred to as a "puff sensor"). In this case, the puff sensor may be implemented by a pressure sensor, a gyro sensor, an acceleration sensor, a magnetic field sensor, or the like.

For example, the sensor module 150 may include a sensor for sensing the temperature of the heater included in the aerosol-generating module 130 and the temperature of the aerosol-generating substance (hereinafter referred to as a "temperature sensor"). In this case, the heater included in the aerosol-generating module 130 may also serve as the temperature sensor. For example, the electro-resistive material of the heater may be a material having a predetermined temperature coefficient of resistance. The sensor module 150 may measure the resistance of the heater, which varies according to the temperature, to thereby sense the temperature of the heater.

For example, in the case in which the main body of the aerosol-generating device 100 is formed to allow a cigarette to be inserted thereinto, the sensor module 150 may include a sensor for sensing insertion of the cigarette (hereinafter referred to as a "cigarette detection sensor").

For example, in the case in which the aerosol-generating device 100 includes a cartridge, the sensor module 150 may include a sensor for sensing mounting/demounting of the cartridge and the position of the cartridge (hereinafter referred to as a "cartridge detection sensor").

In this case, the cigarette detection sensor and/or the cartridge detection sensor may be implemented as an inductance-based sensor, a capacitive sensor, a resistance sensor, or a Hall sensor (or Hall IC) using a Hall effect.

For example, the sensor module 150 may include a voltage sensor for sensing a voltage applied to a component (e.g. the battery 160) provided in the aerosol-generating device 100 and/or a current sensor for sensing a current.

For example, the sensor module 150 may include a sensor configured to output a signal indicating a change in the external shape of the battery 160 (hereinafter referred to as a "battery detection sensor"). In this case, the battery detection sensor may be implemented as a non-contact proximity sensor, such as an infrared ray (IR) sensor or an inductive sensor, and/or a contact sensor using a capacitive method or the like.

The battery 160 may supply electric power used for the operation of the aerosol-generating device 100 under the control of the controller 170. The battery 160 may supply electric power to other components provided in the aerosol-generating device 100. For example, the battery 160 may supply electric power to the communication module included in the communication interface 110, the output device included in the input/output interface 120, and the heater included in the aerosol-generating module 130.

The battery 160 may be a rechargeable battery or a disposable battery. For example, the battery 160 may be a lithium-ion (Li-ion) battery or a lithium polymer (Li-polymer) battery. However, the present disclosure is not limited thereto. For example, when the battery 160 is rechargeable, the charging rate (C-rate) of the battery 160 may be 10C, and the discharging rate (C-rate) thereof may be 10C to 20C. However, the present disclosure is not limited thereto. Also, for stable use, the battery 160 may be manufactured such that 80% or more of the total capacity may be ensured even when charging/discharging is performed 2000 times.

The aerosol-generating device 100 may further include a battery protection circuit module (PCM) (not shown), which is a circuit for protecting the battery 160. The battery protection circuit module (PCM) may be disposed adjacent to the upper surface of the battery 160. For example, in order to prevent overcharging and overdischarging of the battery 160, the battery protection circuit module (PCM) may cut off the electrical path to the battery 160 when a short circuit occurs in a circuit connected to the battery 160, when an overvoltage is applied to the battery 160, or when an overcurrent flows through the battery 160.

The aerosol-generating device 100 may further include a charging terminal to which electric power supplied from the outside is input. For example, the charging terminal may be formed at one side of the main body of the aerosol-generating device 100. The aerosol-generating device 100 may charge the battery 160 using electric power supplied through the charging terminal. In this case, the charging terminal may be configured as a wired terminal for USB communication, a pogo pin, or the like.

The aerosol-generating device 100 may further include a power terminal (not shown) to which electric power supplied from the outside is input. For example, a power line may be connected to the power terminal, which is disposed at one side of the main body of the aerosol-generating device 100. The aerosol-generating device 100 may use the electric power supplied through the power line connected to the power terminal to charge the battery 160. In this case, the power terminal may be a wired terminal for USB communication.

The aerosol-generating device 100 may wirelessly receive electric power supplied from the outside through the communication interface 110. For example, the aerosol-generating device 100 may wirelessly receive electric power using an antenna included in the communication module for wireless communication. The aerosol-generating device 100 may charge the battery 160 using the wirelessly supplied electric power.

The controller 170 may control the overall operation of the aerosol-generating device 100. The controller 170 may be connected to each of the components provided in the aerosol-generating device 100. The controller 170 may transmit and/or receive a signal to and/or from each of the components, thereby controlling the overall operation of each of the components.

The controller 170 may include at least one processor. The controller 170 may control the overall operation of the aerosol-generating device 100 using the processor included therein. Here, the processor may be a general processor such as a central processing unit (CPU). Of course, the processor may be a dedicated device such as an application-specific integrated circuit (ASIC), or may be any of other hardware-based processors.

The controller 170 may perform any one of a plurality of functions of the aerosol-generating device 100. For example, the controller 170 may perform any one of a plurality of functions of the aerosol-generating device 100 (e.g. a preheating function, a heating function, a charging function, and a cleaning function) according to the state of each of the components provided in the aerosol-generating device 100 and the user's command received through the input/output interface 120.

The controller 170 may control the operation of each of the components provided in the aerosol-generating device 100 based on data stored in the memory 140. For example, the controller 170 may control the supply of a predetermined amount of electric power from the battery 160 to the aerosol-generating module 130 for a predetermined time based on the data on the temperature profile, the electric power profile, and the user's inhalation pattern, which is stored in the memory 140.

The controller 170 may determine the occurrence or non-occurrence of a puff using the puff sensor included in the sensor module 150. For example, the controller 170 may check a temperature change, a flow change, a pressure change, and a voltage change in the aerosol-generating device 100 based on the values sensed by the puff sensor. The controller 170 may determine the occurrence or non-occurrence of a puff based on the value sensed by the puff sensor.

The controller 170 may control the operation of each of the components provided in the aerosol-generating device 100 according to the occurrence or non-occurrence of a puff and/or the number of puffs. For example, upon determining that a puff has occurred, the controller 170 may perform control such that electric power is supplied to the heater according to the electric power profile stored in the memory 140. For example, the controller 170 may perform control such that the temperature of the heater is changed or maintained based on the temperature profile stored in the memory 140.

The controller 170 may perform control such that the supply of electric power to the heater is interrupted according to a predetermined condition. For example, the controller 170 may perform control such that the supply of electric power to the heater is interrupted when the cigarette is removed, when the cartridge is demounted, when the number of puffs reaches the predetermined maximum number of puffs, when a puff is not sensed during a predetermined period of time or longer, or when the remaining capacity of the battery 160 is less than a predetermined value.

The controller 170 may calculate the remaining capacity with respect to the full charge capacity of the battery 160. For example, the controller 170 may calculate the remaining capacity of the battery 160 based on the values sensed by the voltage sensor and/or the current sensor included in the sensor module 150.

The controller 170 may monitor a change in the external shape of the battery 160 using the battery detection sensor included in the sensor module 150. For example, the controller 170 may calculate the distance between the inductive sensor and the battery 160 based on a signal received from the inductive sensor. The controller 170 may determine a change in the external shape of the battery 160 in response to the calculated distance.

The controller 170 may control the supply of electric power from the battery 160 to respective components provided in the aerosol-generating device 100 depending on the result of monitoring the change in the external shape of the battery 160. For example, when the change in the external shape of the battery 160 exceeds a predetermined reference, the controller 170 may interrupt the supply of electric power from the battery 160.

FIGS. 2A to 4 are views for explaining the aerosol-generating device according to embodiments of the present disclosure.

According to various embodiments of the present disclosure, the aerosol-generating device 100 may include a main body and/or a cartridge.

Referring to FIG. 2A, the aerosol-generating device 100 according to an embodiment may include a main body 210, which is formed such that a cigarette 201 can be inserted into the inner space formed by a housing 215.

The cigarette 201 may be similar to a general combustive cigarette. For example, the cigarette 201 may be divided into a first portion including an aerosol-generating substance and a second portion including a filter. Alternatively, the second portion of the cigarette 201 may also include an aerosol-generating substance. For example, a granular or capsular flavoring material may be inserted into the second portion.

The entirety of the first portion may be inserted into the aerosol-generating device 100. The second portion may be exposed to the outside. Alternatively, only a portion of the first portion may be inserted into the aerosol-generating device 100. Alternatively, the entirety of the first portion and a portion of the second portion may be inserted into the aerosol-generating device 100. The user may inhale the aerosol in the state of holding the second portion in the mouth. At this time, the aerosol may be generated as external air passes through the first portion. The generated aerosol may pass through the second portion to be introduced into the mouth of the user.

The main body 210 may be structured such that external air is introduced into the main body 210 in the state in which the cigarette 201 is inserted thereinto. In this case, the external air introduced into the main body 210 may flow into the mouth of the user via the cigarette 201.

When the cigarette 201 is inserted, the controller 170 may perform control such that electric power is supplied to the heater based on the temperature profile stored in the memory 140.

The controller 170 may perform control such that electric power is supplied to the heater using at least one of a pulse width modulation (PWM) method or a proportional-integral-differential (PID) method.

For example, the controller 170 may perform control such that a current pulse having a predetermined frequency and a predetermined duty ratio is supplied to the heater using the PWM method. In this case, the controller 170 may control the amount of electric power supplied to the heater by adjusting the frequency and the duty ratio of the current pulse.

For example, the controller 170 may determine a target temperature to be controlled based on the temperature profile. In this case, the controller 170 may control the amount of electric power supplied to the heater using the PID method, which is a feedback control method using a difference value between the temperature of the heater and the target temperature, a value obtained by integrating the difference value with respect to time, and a value obtained by differentiating the difference value with respect to time.

Although the PWM method and the PID method are described as examples of methods of controlling the supply of electric power to the heater, the present disclosure is not limited thereto, and may employ any of various control methods, such as a proportional-integral (PI) method or a proportional-differential (PD) method.

The heater may be disposed in the main body 210 at a position corresponding to the position at which the cigarette 201 is inserted into the main body 210. Although it is illustrated in the drawings that the heater is an electrically conductive heater 220 including a needle-shaped electrically conductive track, the present disclosure is not limited thereto.

The heater may heat the interior and/or exterior of the cigarette 201 using the electric power supplied from the battery 160. An aerosol may be generated from the heated cigarette 201. At this time, the user may hold one end of the cigarette 201 in the mouth to inhale the aerosol containing a tobacco material.

Meanwhile, the controller 170 may perform control such that electric power is supplied to the heater in the state in which the cigarette 201 is not inserted into the main body according to a predetermined condition. For example, when a cleaning function for cleaning the space into which the cigarette 201 is inserted is selected in response to a command input by the user through the input/output interface 120, the controller 170 may perform control such that a predetermined amount of electric power is supplied to the heater.

The controller 170 may monitor the number of puffs based on the value sensed by the puff sensor from the time point at which the cigarette 201 was inserted into the main body.

When the cigarette 201 is removed from the main body, the controller 170 may initialize the current number of puffs stored in the memory 140.

Referring to FIG. 2B, the cigarette 201 according to an embodiment may include a tobacco rod 202 and a filter rod 203. The first portion described above with reference to FIG. 2A may include the tobacco rod 202. The second portion described above with reference to FIG. 2A may include the filter rod 203.

Although it is illustrated in FIG. 2B that the filter rod 203 is composed of a single segment, the present disclosure is not limited thereto. In other words, the filter rod 203 may be composed of a plurality of segments. For example, the filter rod 203 may include a first segment configured to cool an aerosol and a second segment configured to remove a predetermined component included in the aerosol. In addition, the filter rod 203 may further include at least one segment configured to perform other functions, as needed.

The cigarette 201 may be packed using at least one wrapper 205. The wrapper 205 may have at least one hole formed therein to allow external air to be introduced thereinto or to allow internal gas to be discharged therefrom. In one example, the cigarette 201 may be packed using one wrapper 205. In another example, the cigarette 201 may be doubly packed using two or more wrappers 205. For example, the tobacco rod 202 may be packed using a first wrapper. For example, the filter rod 203 may be packed using a second wrapper. The tobacco rod 202 and the filter rod 203, which are individually packed using separate wrappers, may be coupled to each other. The entire cigarette 201 may be packed using a third wrapper. When each of the tobacco rod 202 and the filter rod 203 is composed of a plurality of segments, each segment may be packed using a separate wrapper. The entire cigarette 201, formed by coupling segments, each of which is packed using a separate wrapper, to each other, may be packed using another wrapper.

The tobacco rod 202 may include an aerosol-generating substance. For example, the aerosol-generating substance may include at least one of glycerin, propylene glycol, ethylene glycol, dipropylene glycol, diethylene glycol, triethylene glycol, tetraethylene glycol, or oleyl alcohol, but the present disclosure is not limited thereto. Also, the tobacco rod 202 may include other additives, such as a flavoring agent, a wetting agent, and/or an organic acid. Also, a flavoring liquid, such as menthol or a moisturizer, may be injected into and added to the tobacco rod 202.

The tobacco rod 202 may be manufactured in various forms. For example, the tobacco rod 202 may be formed as a sheet or a strand. For example, the tobacco rod 202 may be formed as shredded tobacco, which is formed by cutting a tobacco sheet into tiny bits. For example, the tobacco rod 202 may be surrounded by a thermally conductive material. For example, the thermally conductive material may be a metal foil such as aluminum foil, but the present disclosure is not limited thereto. In one example, the thermally conductive material surrounding the tobacco rod 202 may uniformly distribute heat transmitted to the tobacco rod 202, thereby improving conduction of the heat applied to the tobacco rod. This may improve the taste of the tobacco. The thermally conductive material surrounding the tobacco rod 202 may function as a susceptor that is heated by the induction heater. Here, although not illustrated in the drawings, the tobacco rod 202 may further include an additional susceptor, in addition to the thermally conductive material surrounding the tobacco rod 202.

The filter rod 203 may be a cellulose acetate filter. The filter rod 203 may be formed in any of various shapes. For example, the filter rod 203 may be a cylinder-type rod. For example, the filter rod 203 may be a hollow tube-type rod. For example, the filter rod 203 may be a recess-type rod. When the filter rod 203 is composed of a plurality of segments, at least one of the plurality of segments may be formed in a different shape.

The filter rod 203 may be formed to generate flavors. In one example, a flavoring liquid may be injected into the filter rod 203. In one example, a separate fiber coated with a flavoring liquid may be inserted into the filter rod 203.

In addition, the filter rod 203 may include at least one capsule 204. Here, the capsule 204 may function to generate a flavor. The capsule 204 may function to generate an aerosol. For example, the capsule 204 may have a structure in which a liquid containing a flavoring material is wrapped with a film. The capsule 204 may have a spherical or cylindrical shape, but the present disclosure is not limited thereto.

When the filter rod 203 includes a segment configured to cool the aerosol, the cooling segment may be made of a polymer material or a biodegradable polymer material. For example, the cooling segment may be made of pure polylactic acid alone, but the present disclosure is not limited thereto. Alternatively, the cooling segment may be formed as a cellulose acetate filter having a plurality of holes formed therein. However, the cooling segment is not limited to the above-described example, and any other type of cooling segment may be used, so long as the same is capable of cooling the aerosol.

Although not illustrated in FIG. 2B, the cigarette 201 according to an embodiment may further include a front-end filter. The front-end filter may be located at the side of the tobacco rod 202 that faces the filter rod 203. The front-end filter may prevent the tobacco rod 202 from becoming detached outwards. The front-end filter may prevent a liquefied aerosol from flowing into the aerosol-generating device 100 from the tobacco rod 202 during inhalation by the user.

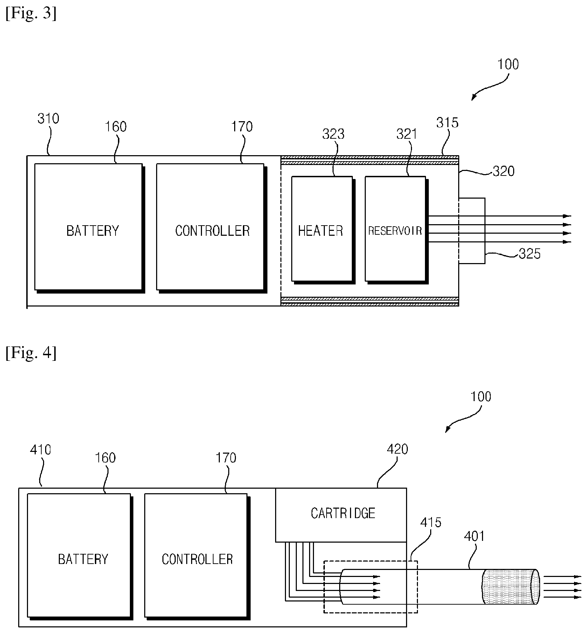

Referring to FIG. 3, the aerosol-generating device 100 according to an embodiment may include a main body 310 and a cartridge 320. The main body 310 may support the cartridge 320, and the cartridge 320 may contain an aerosol-generating substance.

According to one embodiment, the cartridge 320 may be configured so as to be detachably mounted to the main body 310. According to another embodiment, the cartridge 320 may be formed integrally with the main body 310. For example, the cartridge 320 may be mounted to the main body 310 in a manner such that at least a portion of the cartridge 320 is inserted into the inner space formed by a housing 315 of the main body 310.

The main body 310 may be formed to have a structure in which external air can be introduced into the main body 310 in the state in which the cartridge 320 is inserted thereinto. Here, the external air introduced into the main body 310 may flow into the user's mouth via the cartridge 320.

The controller 170 may determine whether the cartridge 320 is in a mounted state or a detached state using a cartridge detection sensor included in the sensor module 150. For example, the cartridge detection sensor may transmit a pulse current through a terminal connected to the cartridge 320. In this case, the cartridge detection sensor may determine whether the cartridge 320 is in a connected state, based on whether the pulse current is received through another terminal.

The cartridge 320 may include a reservoir 321 configured to contain the aerosol-generating substance and/or a heater 323 configured to heat the aerosol-generating substance in the reservoir 321. For example, a liquid delivery element impregnated with (containing) the aerosol-generating substance may be disposed inside the reservoir 321. The electrically conductive track of the heater 323 may be formed in a structure that is wound around the liquid delivery element. In this case, when the liquid delivery element is heated by the heater 323, an aerosol may be generated. Here, the liquid delivery element may include a wick made of, for example, cotton fiber, ceramic fiber, glass fiber, or porous ceramic.

The cartridge 320 may include a mouthpiece 325. Here, the mouthpiece 325 may be a portion to be inserted into a user's oral cavity. The mouthpiece 325 may have a discharge hole through which the aerosol is discharged to the outside during a puff.

Referring to FIG. 4, the aerosol-generating device 100 according to an embodiment may include a main body 410 supporting the cartridge 420 and a cartridge 420 containing an aerosol-generating substance. The main body 410 may be formed so as to allow a cigarette 401 to be inserted into an inner space 415 therein.

The aerosol-generating device 100 may include a first heater for heating the aerosol-generating substance stored in the cartridge 420. For example, when the user holds one end of the cigarette 401 in the mouth to inhale the aerosol, the aerosol generated by the first heater may pass through the cigarette 401. At this time, while the aerosol passes through the cigarette 401, a tobacco material may be added to the aerosol. The aerosol containing the tobacco material may be drawn into the user's oral cavity through one end of the cigarette 401.

Alternatively, according to another embodiment, the aerosol-generating device 100 may include a first heater for heating the aerosol-generating substance stored in the cartridge 420 and a second heater for heating the cigarette 401 inserted into the main body 410. For example, the aerosol-generating device 100 may generate an aerosol by heating the aerosol-generating substance stored in the cartridge 420 and the cigarette 401 using the first heater and the second heater, respectively.

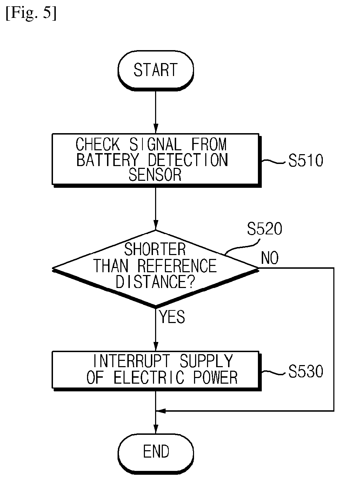

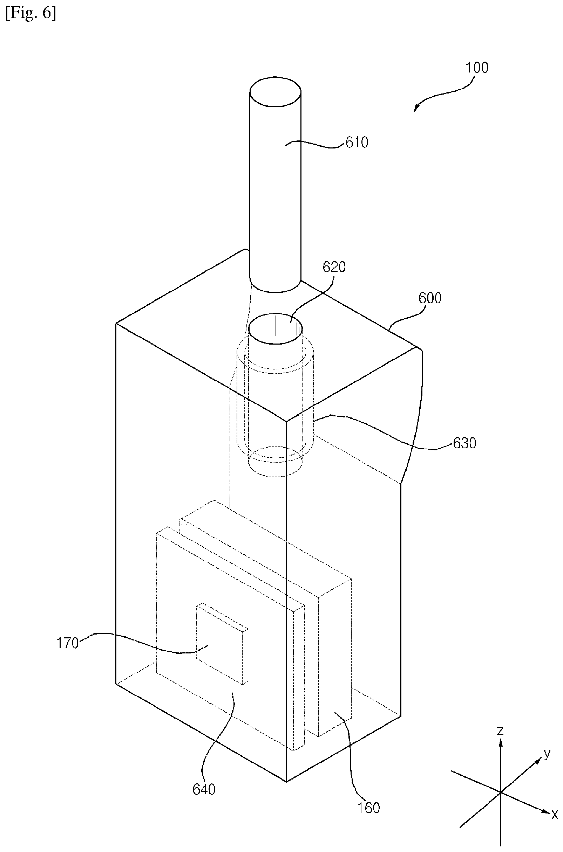

FIG. 5 is a flowchart showing an operation method of the aerosol-generating device according to an embodiment of the present disclosure, and FIGS. 6 to 8B are views for explaining the operation of the aerosol-generating device.

Referring to FIG. 5, the aerosol-generating device 100 may check a signal output from the battery detection sensor included in the sensor module 150 in operation S510. For example, the battery detection sensor may be disposed so as to sense a change in the shape of one side surface of the battery 160.

Referring to FIG. 6, the battery 160, the printed circuit board 640 on which the controller 170 is mounted, and the heater 630 may be disposed in the main body 600 of the aerosol-generating device 100.

The components included in the aerosol-generating device 100 may be mounted on one surface and/or the opposite surface of the printed circuit board 640. The components mounted on one surface and/or the opposite surface of the printed circuit board 640 may transmit and receive signals to and from each other through a wiring layer of the printed circuit board 640.

For example, the communication module included in the communication interface 110, the display included in the input/output interface 120, the memory 140, and the controller 170 may be mounted on one surface of the printed circuit board 640.

For example, the battery detection sensor may be disposed on the opposite surface of the printed circuit board 640. In this case, the opposite surface of the printed circuit board 640 may be disposed so as to face the battery 160.

The heater 630 may be disposed adjacent to a cigarette insertion space 620 formed in the upper end of the main body 600 so as to allow a cigarette 610 to be inserted thereinto. The heater 630 may heat the cigarette 610 disposed in the cigarette insertion space 620 using the electric power of the battery 160 transmitted via the printed circuit board 640.

The cigarette insertion space 620 may be a space formed by being depressed by a predetermined depth toward the interior of the aerosol-generating device 100 so that the cigarette 610 is inserted at least partway thereinto.

In this case, the depth of the cigarette insertion space 620 may correspond to the length of the portion of the cigarette 610 that contains an aerosol-generating substance. For example, in the case in which the cigarette 201 shown in FIG. 2B is capable of being used in the aerosol-generating device 100, the depth of the cigarette insertion space 620 may be equal to the length of the tobacco rod 202 of the cigarette 201.

The internal structure of the aerosol-generating device 100 is not limited to that shown in FIG. 6. The arrangement of the battery 160, the controller 170, and the heater 630 may vary depending on the embodiment or design.

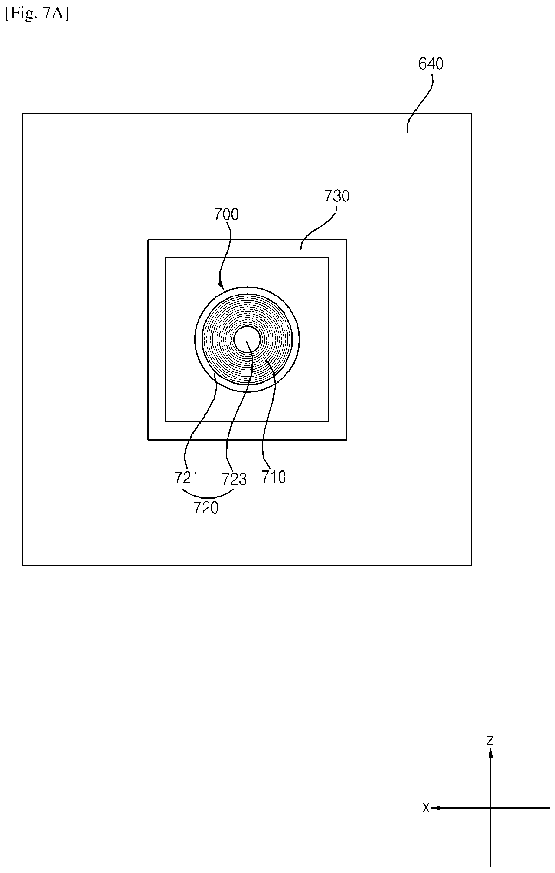

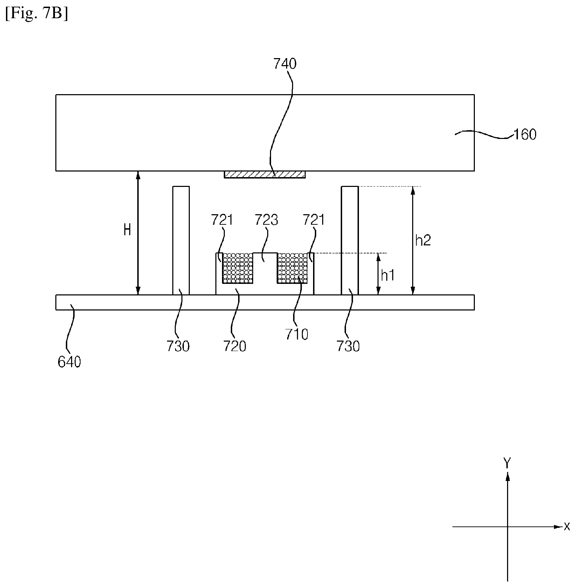

Referring to FIGS. 7A and 7B, the battery detection sensor 700 disposed on the opposite surface of the printed circuit board 640 may include a coil unit 710 and/or a core unit 720.

The coil unit 710 may include a coil wound at least once. In this case, the coil may be wound in at least one layer. For example, the coil may be disposed so as to be wound multiple times in each of multiple layers.

Although the coil included in the coil unit 710 is illustrated in the drawings as having a circular shape, the present disclosure is not limited thereto. The coil included in the coil unit 710 may be formed in a polygonal shape, such as a triangular shape or a rectangular shape.

The core unit 720 may be formed so as to surround the outer periphery of the coil unit 710.

The core unit 720 may include an outer support portion 721 formed so as to surround the outer periphery of the coil included in the coil unit 710 and/or an inner support portion 723 formed so as to be surrounded by the inner periphery of the coil.

The distance between the outer support portion 721 and the inner support portion 723 may correspond to the size of the coil included in the coil unit 710. The height h1 of the outer support portion 721 and/or the inner support portion 723 in the y-axis direction may be equal to or greater than the height to which the coil included in the coil unit 710 is stacked.

The core unit 720 may be formed of ferrite containing one element or a combination of two or more elements selected from the group consisting of cobalt (Co), iron (Fe), nickel (Ni), boron (B), and silicon (Si). For example, the core unit 720 may be formed of a soft magnetic material, which is easily demagnetized and exhibits low hysteresis loss.

In addition, a shielding member 730 may be disposed on the opposite surface of the printed circuit board 640 in order to surround the battery detection sensor 700. Although it is illustrated in the drawings that the space surrounded by the shielding member 730 has a rectangular-shaped cross-section, the present disclosure is not limited thereto. The cross-section of the space surrounded by the shielding member 730 may be formed in any of various shapes, such as a circular shape or a triangular shape.

The shielding member 730 may be formed of a ferromagnetic material containing one element or a combination of two or more elements selected from the group consisting of cobalt (Co), iron (Fe), nickel (Ni), boron (B), and silicon (Si).

In this case, the magnetic field induced by the current flowing through the coil included in the battery detection sensor 700 may not affect the outside of the space surrounded by the shielding member 730. Also, the external magnetic field may not affect the space surrounded by the shielding member 730.

The height h2 of the shielding member 730 in the y-axis direction may correspond to the distance H between the opposite surface of the printed circuit board 640 and the battery 160. For example, the height h2 of the shielding member 730 in the y-axis direction may be equal to or greater than the height h1 of the outer support portion 721 and/or the inner support portion 723 in the y-axis direction, and may be equal to or less than the distance H between the opposite surface of the printed circuit board 640 and the battery 160.

In addition, a sensing target object 740 may be disposed on the side surface of the battery 160 that faces the opposite surface of the printed circuit board 640. For example, the sensing target object 740 may be disposed on one side surface of the battery 160 so as to face the battery detection sensor 700 at a position corresponding to the position at which the battery detection sensor 700 is disposed on the opposite surface of the printed circuit board 640.

The sensing target object 740 may be an object containing a metal component, which exhibits excellent bending resistance and has a predetermined thickness.

When a current flows through the coil of the coil unit 710, a magnetic field may be formed around the coil. An eddy current may flow through the sensing target object 740 containing a metal component.

In this case, when the position of the sensing target object 740 located in the magnetic field changes, the impedance of the coil of the coil unit 710 may change. For example, when the battery 160 swells due to the gas generated inside the battery 160 and thus the sensing target object 740 approaches the battery detection sensor 700, the impedance of the coil of the coil unit 710 may change.

The battery detection sensor 700 may output an electric signal corresponding to the impedance of the coil of the coil unit 710 to an external component (e.g. the controller 170). The battery detection sensor 700 may also output an electric signal corresponding to a change in the impedance of the coil of the coil unit 710 to an external component (e.g. the controller 170).

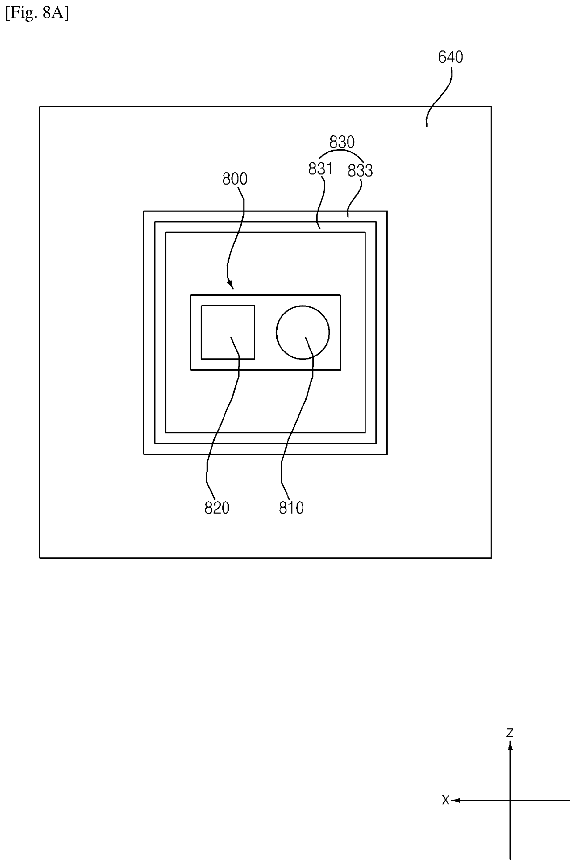

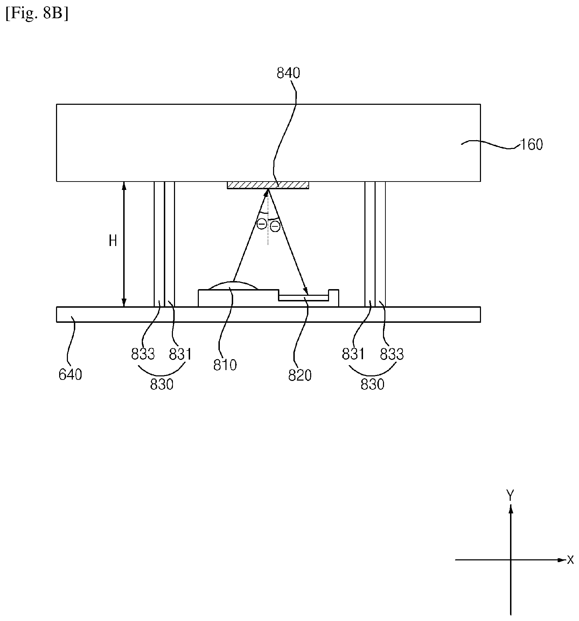

Referring to FIGS. 8A and 8B, the battery detection sensor 800, which is disposed on the opposite surface of the printed circuit board 640, may include a light emitter 810 and a light receiver 820.

The light emitter 810 may generate and radiate light. For example, the light emitter 810 may radiate an infrared ray having a wavelength of 780 nm to 1 mm.

The light emitter 810 may include at least one light source for generating light. For example, the light emitter 810 may include a light source such as a light-emitting diode (LED), an organic light-emitting diode (OLED), or a laser diode (LD). The light emitter 810 may include a plurality of light sources. In this case, the plurality of light sources may be arranged in a regular pattern.

The light emitter 810 may radiate light in a predetermined direction. For example, the light emitter 810 may include a first light condenser (not shown) for condensing the light generated by the light source toward the object. Here, the first light condenser may be configured as an imaging lens, a diffractive optical element (DOE), or the like.

The light receiver 820 may include a photodiode, which responds to light. The light receiver 820 may output an electric signal corresponding to the light incident on the photodiode.

The light receiver 820 may include a second light condenser (not shown) for condensing light reflected from the object (hereinafter referred to as "reflected light"). For example, the reflected light condensed by the second light condenser may be transmitted to the photodiode included in the light receiver 820. In this case, the second light condenser may include a lens for receiving the reflected light incident thereon from a predetermined direction.

The light receiver 820 may further include an optical filter (not shown) configured to restrictively transmit light in a specific wavelength range. For example, in the case in which the light emitter 810 radiates an infrared ray having a wavelength of 780 nm to 1 mm, the optical filter may be an infrared band pass filter, which restrictively transmits an infrared ray.

In addition, a partition member 830 may be disposed on the opposite surface of the printed circuit board 640 in order to surround the battery detection sensor 800. Although it is illustrated in the drawings that the space surrounded by the partition member 830 has a rectangular-shaped cross-section, the present disclosure is not limited thereto. The cross-section of the space surrounded by the partition member 830 may be formed in any of various shapes, such as a circular shape or a triangular shape.

The height of the partition member 830 in the y-axis direction may correspond to the distance H between the opposite surface of the printed circuit board 640 and the battery 160. For example, the height of the shielding member 730 in the y-axis direction may be equal to the distance H between the opposite surface of the printed circuit board 640 and the battery 160. Accordingly, it is possible to prevent the space surrounded by the partition member 830, in which the battery detection sensor 800 is disposed, from being exposed to external light.

The partition member 830 may include an inner wall portion 831 and/or an outer wall portion 833. For example, the inner wall portion 831 may be formed such that the inner peripheral surface thereof surrounds the battery detection sensor 800. The outer wall portion 833 may be formed such that the inner peripheral surface thereof surrounds the outer peripheral surface of the inner wall portion 831.

The inner wall portion 831 may be formed of a material that has high light absorption and low light reflectance with respect to the light radiated from the light emitter 810 and/or the reflected light. The outer wall portion 833 may be formed of a material that has higher light reflectance, lower light absorption, and lower light transmittance than that of the inner wall portion 831.

In addition, a reflection target object 840 may be disposed on the side surface of the battery 160 that faces the opposite surface of the printed circuit board 640. For example, the reflection target object 840 may be disposed on one side surface of the battery 160 so as to face the battery detection sensor 800 at a position corresponding to the position at which the battery detection sensor 800 is disposed in the opposite surface of the printed circuit board 640.

The surface of the reflection target object 840 may be formed of a material that has high light reflectance, low light absorption, low light transmittance, and low diffuse reflection with respect to the light radiated from the light emitter 810 (e.g. metal such as silver (Ag)).

The reflection target object 840 may be formed to have excellent bending resistance and a predetermined thickness.

In the case in which the side surface of the battery 160 has a constant shape, the light radiated from the light emitter 810 in a predetermined direction may be reflected from the reflection target object 840. A predetermined amount of light reflected from the reflection target object 840 may be transmitted to the light receiver 820. In this case, the light receiver 820 may output an electric signal corresponding to the amount of light incident on the photodiode.

In the case in which the battery 160 swells due to gas generated inside the battery 160 and thus the shape of the surface of the reflection target object 840, from which light is reflected, changes, the amount of light incident on the photodiode may change. Also, when the shape of the surface of the reflection target object 840 changes, the time difference between the time point at which light is radiated from the light emitter 810 and the time point at which the reflected light is incident on the light receiver 820 may change.

The battery detection sensor 800 may output an electric signal corresponding to the amount of light incident on the light receiver 820 and/or the time difference to an external component (e.g. the controller 170). The battery detection sensor 800 may detect a change in the amount of light incident on the light receiver 820 and/or a change in the time difference. The battery detection sensor 800 may output an electric signal corresponding to the result of the detection to an external component (e.g. the controller 170).

Referring again to FIG. 5, the aerosol-generating device 100 may determine whether the distance between the battery detection sensor and the battery 160 is shorter than a predetermined reference distance based on a signal output from the battery detection sensor included in the sensor module 150 in operation S520. Here, the reference distance may be the minimum distance between the battery detection sensor and the battery 160. The minimum distance may be the distance at which it is determined that the external shape of the battery 160 has not changed.

For example, when the signal output from the battery detection sensor is a preset reference signal, the aerosol-generating device 100 may determine that the distance between the battery detection sensor and the battery 160 is the reference distance. For example, when the signal output from the battery detection sensor is different from the reference signal, the aerosol-generating device 100 may determine that the distance between the battery detection sensor and the battery 160 is shorter than the reference distance.

When the distance between the battery detection sensor and the battery 160 is shorter than the predetermined reference distance, the aerosol-generating device 100 may determine that swelling has occurred in operation S530. The aerosol-generating device 100 may stop supplying electric power from the battery 160 to the respective components included in the aerosol-generating device 100.

In this case, the aerosol-generating device 100 may output a warning message indicating the occurrence of swelling through the output device (e.g. a buzzer), and may interrupt the supply of electric power from the battery 160.

As described above, according to at least one of the embodiments of the present disclosure, it is possible to monitor a change in the external shape of the battery 160 in real time using various sensors and thus to immediately sense the occurrence of swelling of the battery 160 attributable to deterioration thereof.

Referring to FIGS. 1 to 8B, an aerosol-generating device 100 in accordance with one aspect of the present disclosure may include a heater configured to heat an aerosol-generating substance, a battery 160 configured to supply electric power to the heater, a sensor disposed adjacent to the battery 160 and configured to output a signal, and a controller 170. The controller 170 may determine the distance between the sensor and the battery 160 based on a change in a signal received from the sensor. When the distance between the sensor and the battery 160 is shorter than a predetermined reference distance, the controller 170 may perform control such that supply of electric power from the battery 160 to the heater is interrupted.

In addition, in accordance with another aspect of the present disclosure, when receiving a preset reference signal from the sensor, the controller 170 may determine that the distance between the sensor and the battery 160 is the predetermined reference distance. When receiving a signal different from the preset reference signal from the sensor, the controller 170 may determine that the distance between the sensor and the battery 160 is shorter than the predetermined reference distance.

In addition, in accordance with another aspect of the present disclosure, the sensor may be mounted on the surface of a printed circuit board 640 that faces one side surface of the battery 160 and is disposed so as to be spaced a predetermined distance apart from the side surface of the battery 160.

In addition, in accordance with another aspect of the present disclosure, the sensor may include a coil unit 710, including a coil wound in at least one layer, and a core unit 720, formed so as to surround the outer periphery of the coil unit 710. The core unit 720 may be formed of a soft magnetic material.

In addition, in accordance with another aspect of the present disclosure, the sensor may include a coil wound in at least one layer, and the controller 170 may determine whether the distance between the sensor and the battery 160 is shorter than the predetermined reference distance based on a signal corresponding to an impedance of the coil, which is received from the sensor.

In addition, in accordance with another aspect of the present disclosure, the aerosol-generating device may further include a shielding member 730 formed on the surface of the printed circuit board 640 on which the sensor is mounted. The shielding member 730 may surround the sensor, and may be formed of a ferromagnetic material.

In addition, in accordance with another aspect of the present disclosure, the sensor may include a light emitter 810, including at least one light source configured to generate and radiate light, and a light receiver 820, including at least one photodiode configured to respond to light incident thereon. The controller 170 may determine whether the distance between the sensor and the battery 160 is shorter than the predetermined reference distance based on a signal corresponding to the amount of light incident on the light receiver 820, which is received from the sensor.

In addition, in accordance with another aspect of the present disclosure, the sensor may further include a filter configured to restrictively transmit light in a specific wavelength range. The specific wavelength range may correspond to the wavelength range of light radiated from the light emitter 810.

In addition, in accordance with another aspect of the present disclosure, the aerosol-generating device may further include a partition member 830 formed on the surface of the printed circuit board 640 on which the sensor is mounted. The partition member 830 may surround the sensor. The height of the partition member 830 from the surface of the printed circuit board 640 toward one side surface of the battery 160 may be equal to the distance between the surface of the printed circuit board 640 and the side surface of the battery 160.

In addition, in accordance with another aspect of the present disclosure, the aerosol-generating device may further include an inner wall portion 831 formed to have an inner peripheral surface surrounding the sensor and an outer wall portion 833 formed to have an inner peripheral surface surrounding the outer peripheral surface of the inner wall portion 831. The inner wall portion 831 may have higher light absorption and lower light reflectance than the outer wall portion 833.

In addition, in accordance with another aspect of the present disclosure, the aerosol-generating device may further include an object disposed on one side surface of the battery 160 at a position facing the sensor. The object may have a surface formed of metal.

In addition, in accordance with another aspect of the present disclosure, the aerosol-generating device may further include an output device configured to output a message. When the distance between the sensor and the battery 160 is shorter than the predetermined reference distance, the controller 170 may output a warning message through the output device. After the warning message is output, the controller 170 may perform control such that supply of electric power from the battery 160 is interrupted.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An aerosol-generating device (100) comprising:
a heater configured to heat an aerosol-generating substance;
a battery (160) configured to supply electric power to the heater;
a sensor (800) disposed adjacent to the battery; and
a controller (170),
wherein the sensor (800) comprises:
a light emitter (810) comprising at least one light source configured to generate and radiate light; and
a light receiver (820) comprising at least one photodiode configured to respond to light incident thereon,
**characterized in that**:
the aerosol-generating device (100) further comprises a partition member (830) configured to surround the sensor (800),
an inner wall portion (831) of the partition member (830) surrounding the sensor (800) has a higher light absorption and lower light reflectance than an outer wall portion (833) of the partition member (830), and
the controller (170) is configured to:
determine a distance between the sensor (800) and the battery (160) based on a signal received from the sensor (800) corresponding to an amount of light incident on the light receiver (820), and
based on the determined distance between the sensor (800) and the battery (160) being less than a predetermined reference distance, perform control such that supply of electric power from the battery (160) to the heater is interrupted.

2. The aerosol-generating device (100) according to claim 1, wherein the controller (170) is configured to:
determine that the distance between the sensor (800) and the battery (160) is the predetermined reference distance based on receiving a preset reference signal from the sensor (800), and
determine that the distance between the sensor (800) and the battery (160) is less than the predetermined reference distance based on receiving a signal different from the preset reference signal.

3. The aerosol-generating device (100) according to claim 1, wherein the sensor (800) is mounted on a surface of a printed circuit board (640) to face one side of the battery (160) and is disposed so as to be spaced apart from the one side of the battery (160) by a predetermined distance.

4. The aerosol-generating device (100) according to claim 1, wherein the light receiver (820) further comprises an optical filter configured to selectively transmit light in a specific wavelength range, and
wherein the specific wavelength range corresponds to a wavelength range of light radiated from the light emitter (810).

5. The aerosol-generating device (100) according to claim 1, wherein the partition member is formed on a surface of a printed circuit board (640) on which the sensor (800) is mounted,
wherein a height of the partition member (830) from the surface of the printed circuit board (640) toward the battery (160) is equal to a distance between the surface of the printed circuit board (640) and the battery (160).

6. The aerosol-generating device (100) according to claim 1, further comprising:
an object disposed on the battery (160) at a position facing the sensor (800),
wherein the object has a surface formed of metal.

7. The aerosol-generating device (100) according to claim 1, further comprising:
an output device configured to output a message,
wherein the controller (170) is configured to output a warning message through the output device based on the determined distance being less than the predetermined reference distance before the interruption of the supply of electric power to the heater.

## Patentansprüche

1. Aerosolerzeugungsvorrichtung (100), die Folgendes umfasst:
ein Heizelement, das dazu konfiguriert ist, eine Aerosol erzeugende Substanz zu erwärmen;
eine Batterie (160), die dazu konfiguriert ist, Strom an das Heizelement zu liefern;
einen Sensor (800), der neben der Batterie angeordnet ist; und
eine Steuerung (170),
wobei der Sensor (800) Folgendes umfasst:
einen Lichtemitter (810), der mindestens eine Lichtquelle umfasst, die dazu konfiguriert ist, Licht zu erzeugen und auszustrahlen; und
einen Lichtempfänger (820), der mindestens eine Fotodiode umfasst, die dazu konfiguriert ist, auf darauf einfallendes Licht zu reagieren,
**dadurch gekennzeichnet, dass**:
die Aerosolerzeugungsvorrichtung (100) ferner ein Trennelement (830) umfasst, das dazu konfiguriert ist, den Sensor (800) zu umgeben,
ein Innenwandabschnitt (831) des den Sensor (800) umgebenden Trennelements (830) eine höhrere Lichtabsorption und eine geringere Lichtreflexion aufweist als ein Außenwandabschnitt (833) des Trennelements (830), und
die Steuerung (170) für Folgendes konfiguriert ist:
Bestimmen eines Abstands zwischen dem Sensor (800) und der Batterie (160) basierend auf einem vom Sensor (800) empfangenen Signal, das einer Menge an auf den Lichtempfänger (820) einfallendem Licht entspricht, und basierend darauf, dass der bestimmte Abstand zwischen dem Sensor (800) und der Batterie (160) kleiner ist als ein vorbestimmter Referenzabstand, Durchführen einer Steuerung, so dass die Stromzufuhr von der Batterie (160) zum Heizelement unterbrochen wird.

2. Aerosolerzeugungsvorrichtung (100) nach Anspruch 1, wobei die Steuerung (170) für Folgendes konfiguriert ist:
Bestimmen, dass der Abstand zwischen dem Sensor (800) und der Batterie (160) der vorbestimmte Referenzabstand ist, basierend auf dem Empfangen eines voreingestellten Referenzsignals vom Sensor (800), und
Bestimmen, dass der Abstand zwischen dem Sensor (800) und der Batterie (160) kleiner ist als der vorbestimmte Referenzabstand, basierend auf dem Empfangen eines Signals, das sich von dem voreingestellten Referenzsignal unterscheidet.

3. Aerosolerzeugungsvorrichtung (100) nach Anspruch 1, wobei der Sensor (800) auf einer Oberfläche einer Leiterplatte (640) so montiert ist, dass er einer Seite der Batterie (160) zugewandt ist, und so angeordnet ist, dass er um einen vorbestimmten Abstand von der einen Seite der Batterie (160) beabstandet ist.

4. Aerosolerzeugungsvorrichtung (100) nach Anspruch 1, wobei der Lichtempfänger (820) ferner einen optischen Filter umfasst, der dazu konfiguriert ist, Licht in einem spezifischen Wellenlängenbereich selektiv zu übertragen, und
wobei der spezifische Wellenlängenbereich einem Wellenlängenbereich des vom Lichtemitter (810) ausgestrahlten Lichts entspricht.

5. Aerosolerzeugungsvorrichtung (100) nach Anspruch 1, wobei das Trennelement auf einer Oberfläche einer Leiterplatte (640) ausgebildet ist, auf der der Sensor (800) montiert ist,
wobei eine Höhe des Trennelements (830) von der Oberfläche der Leiterplatte (640) in Richtung der Batterie (160) gleich einem Abstand zwischen der Oberfläche der Leiterplatte (640) und der Batterie (160) ist.

6. Aerosolerzeugungsvorrichtung (100) nach Anspruch 1, die ferner Folgendes umfasst:
ein Objekt, das auf der Batterie (160) an einer dem Sensor (800) zugewandten Position angeordnet ist,
wobei das Objekt eine aus Metall ausgebildete Oberfläche aufweist.

7. Aerosolerzeugungsvorrichtung (100) nach Anspruch 1, die ferner Folgendes umfasst:
eine Ausgabevorrichtung, die dazu konfiguriert ist, eine Meldung auszugeben, wobei die Steuerung (170) dazu konfiguriert ist, vor der Unterbrechung der Stromzufuhr zum Heizelement eine Warnmeldung durch die Ausgabevorrichtung basierend darauf auszugeben, dass der bestimmte Abstand kleiner ist als der vorbestimmte Referenzabstand.

## Revendications

1. Dispositif de génération d'aérosol (100) comprenant :
un moyen de chauffage configuré pour chauffer une substance de génération d'aérosol ;
une batterie (160) configurée pour fournir de l'énergie électrique au moyen de chauffage ;
un capteur (800) disposé de façon adjacente à la batterie ; et
un moyen de commande (170),
dans lequel le capteur (800) comprend :
un émetteur de lumière (810) comprenant au moins une source de lumière configurée pour générer et diffuser de la lumière ; et
un récepteur de lumière (820) comprenant au moins une photodiode configurée pour réagir à une lumière incidente sur celle-ci,
**caractérisé en ce que** :
le dispositif de génération d'aérosol (100) comprend en outre un élément de séparation (830) configuré pour entourer le capteur (800),
une partie de paroi intérieure (831) de l'élément de séparation (830) entourant le capteur (800) présente une absorption lumineuse plus élevée et une réflectance lumineuse plus faible en comparaison avec une partie de paroi extérieure (833) de l'élément de séparation (830), et
le moyen de commande (170) est configuré pour :
déterminer une distance entre le capteur (800) et la batterie (160) sur la base d'un signal reçu à partir du capteur (800) correspondant à une quantité de lumière incidente sur le récepteur de lumière (820), et
sur la base de la distance déterminée entre le capteur (800) et la batterie (160) comme étant inférieure à une distance de référence prédéterminée, exécuter une commande de manière à interrompre l'alimentation d'énergie électrique de la batterie (160) vers le moyen de chauffage.

2. Dispositif de génération d'aérosol (100) selon la revendication 1, dans lequel le moyen de commande (170) est configuré pour :
déterminer que la distance entre le capteur (800) et la batterie (160) est la distance de référence prédéterminée sur la base de la réception d'un signal de référence prédéfini à partir du capteur (800), et
déterminer que la distance entre le capteur (800) et la batterie (160) est inférieure à la distance de référence prédéterminée sur la base de la réception d'un signal différent du signal de référence prédéfini.

3. Dispositif de génération d'aérosol (100) selon la revendication 1, dans lequel le capteur (800) est monté sur une surface d'une carte de circuit imprimé (640) de manière à faire face à un côté de la batterie (160) et disposé de manière à être espacé dudit un côté de la batterie (160) selon une distance prédéterminée.

4. Dispositif de génération d'aérosol (100) selon la revendication 1, dans lequel le récepteur de lumière (820) comprend en outre un filtre optique configuré pour transmettre sélectivement de la lumière dans une plage de longueur d'onde spécifique, et
dans lequel la plage de longueur d'onde spécifique correspond à une plage de longueur d'onde d'une lumière diffusée à partir de l'émetteur de lumière (810).

5. Dispositif de génération d'aérosol (100) selon la revendication 1, dans lequel l'élément de séparation est formé sur une surface d'une carte de circuit imprimé (640) sur laquelle le capteur (800) est monté,
dans lequel une hauteur de l'élément de séparation (830) à partir de la surface de la carte de circuit imprimé (640) vers la batterie (160) est égale à une distance entre la surface de la carte de circuit imprimé (640) et la batterie (160).

6. Dispositif de génération d'aérosol (100) selon la revendication 1, comprenant en outre :
un objet disposé sur la batterie (160) à une position faisant face au capteur (800),
dans lequel l'objet a une surface constituée de métal.

7. Dispositif de génération d'aérosol (100) selon la revendication 1, comprenant en outre :
un dispositif de sortie configuré pour envoyer un message,
dans lequel le moyen de commande (170) est configuré pour envoyer un message d'alerte par le biais du dispositif de sortie sur la base de la distance déterminée comme étant inférieure à la distance de référence prédéterminée avant l'interruption de l'alimentation d'énergie électrique vers le moyen de chauffage.
